# EUROPEAN PATENT SPECIFICATION

(11) **EP 1 655 215 B1**
(45) Date of publication and mention of the grant of the patent: **11.01.2012**
(21) Application number: 04771218.7
(22) Date of filing: 04.08.2004
(51) Int. Cl.: B62J 35/00

(54) **Motorcycle**
Motorrad
Motocyclette

(30) Priority: 06.08.2003 JP 2003288279
(43) Date of publication of application: 10.05.2006
(73) Proprietor: YAMAHA MOTOR CO., LTD., Iwata-shi Shizuoka 438-8501 (JP)
(72) Inventor: ARIMURA, Masatsugu, Iwata-shi, Shizuoka 438-8501 (JP); IIZUKA, Toshio, Iwata-shi, Shizuoka 438-8501 (JP)
(74) Representative: Grünecker, Kinkeldey, Stockmair & Schwanhäusser
(86) International application number: PCT/JP2004/011183
(87) International publication number: WO 2005/014382

(56) References cited:
- DE-A1- 19 938 273
- JP-A- 2 028 075
- JP-A- 9 315 364
- JP-A- 56 025 072
- JP-A- 59 040 947
- JP-A- 2002 264 870
- JP-A- 2002 293 281

## Description

The present invention relates to a motorcycle comprising a fuel tank. In particular, the present invention relates to a motor cycle comprising a fuel tank In which a fuel pump is installed at inside of the fuel tank, particularly relates to a motorcycle comprising a fuel tank for supplying a fuel remaining at inside of a fuel tank efficiently to a side of an engine.

Generally, a fuel tank of a motor cycle is installed on a main frame (tank rail) connected to a head pipe, and an engine supported by the main frame is mounted on a lower side thereof. An exposing area of the fuel tank is large, and design performance thereof is emphasized while taking air resistance in running and a riding position of a rider into account. The engine is mounted on the lower side of the main frame supporting the fuel tank and the fuel tank is variously restricted in view of layout thereof such that a seat of the rider is arranged on a rear side of the fuel tank. Particularly, when there is adopted a pair of left and right frame structures for the main frame in order to promoted a rigidity of a vehicle body frame of the motor cycle, it is difficult to ensure a volume of the fuel pump by being hampered by the pair of left and right frames disposed on the lower side of the fuel tank.

Meanwhile, although it is preferable to arrange the fuel pump at the lowest portion of the fuel tank to supply the remaining fuel efficiently to the side of the engine even when the remaining amount of the fuel at inside of the fuel tank becomes small, since the fuel tank is restricted in view of the above-described layout, design of the fuel tank for satisfying both of design feature and function feature thereof becomes difficult.

JP 2002-293281 describes a constitution of a fuel tank for efficiently supplying a remaining fuel to a side of an engine while ensuring design performance under such a restriction in view of layout.

Fig.8 and Fig.9 are a side view and a sectional view of a fuel tank 100 disclosed in JP 2002-293281. As shown by Fig.8 and Fig.9, the fuel tank 100 is arranged on a pair of left and right tank rails (upper pipes) 101 and an inner bottom face 102 of the fuel tank disposed on inner sides of the pair of left and right tank rails constitutes an inclined face inclined to a rear lower side along an inclination of the tank rail 101. Further, an outer side of the tank rail 101 of the fuel tank 101 is formed with an overhang portion 103, further, a rearmost portion of the fuel tank 100 is formed with a horizontal face 104 disposed on an upper side of the tank rail 101 and the horizontal face constitutes the lowest portion of the fuel tank 100.

A fuel pump 105 is arranged at an inner bottom face 102a constituting the inclined face of the fuel tank 100, and a lower side of the fuel pump 105 is formed with a projected portion 106 projected from the inner bottom face 102a of the fuel tank 100 to expose to outside. The projected portion 106 is separated from the fuel tank 100 and a bottom portion of the projected portion 106 is provided with a suck in portion 107 of the fuel pump. Further, the horizontal face 104 constituting the rearmost portion of the fuel tank 100 is provided with a suck out portion 108 of fuel and the suck out portion is connected to the suck in portion 107 of the fuel pump by a tube 109.

According to the above-described constitution, even when the fuel pump 105 is not arranged at the lowest portion of the fuel tank 100, fuel can be sucked out always from the lowest portion of the fuel tank and the remaining fuel can efficiently be supplied to the side of the engine. Further, a degree of freedom for arranging the fuel tank is increased and therefore, the design performance of the fuel tank is not deteriorated. Further, the outer side of the tank rail 101 of the fuel tank 100 is formed with the overhang portion 103 and therefore, the volume of the fuel tank 100 can be enlarged.

However, according to the fuel tank 100 described in JP 2002-293281 the projected portion 106 exposed to outside of the fuel tank needs to form separately from the fuel tank. Further, the suck out portion 108 of fuel needs to provide at the lowest portion of the fuel tank, further, the suck out portion 108 and the suck in portion 107 of the fuel pump provided to the projected portion 106 need to be connect by the tube 109. Such a constitution poses a new problem that not only a number of parts of the fuel tank is increased but also the number of operating steps is increased, as a result, the productivity is lowered and therefore, the costs is increased. The invention has been carried out in view of such a point.

DE 199 38 273 A1 discloses a motorcycle comprising a fuel tank which is readable on the preamble part of claim 1.

In JP 02028075, a motor cycle is disclosed in which a fuel tank is set up in right and left main frames of said motor cycle.

In JP 59040947, a fuel tank is arranged on a tank frame of a body frame of a motor cycle. A bottom surface of the fuel tank is inclined downwardly towards the rear of said motor cycle.

In JP 09315364, a fuel tank is arranged above and between right and left frames of a motor cycle.

It is an objective of the present invention to provide a motorcycle comprising a fuel tank capable of efficiently supplying a remaining fuel to a side of an engine by a simple constitution without increasing a number of parts.

According to the present invention, said objective is solved by a motorcycle comprising a fuel tank having the combination of the features of independent claim 1.

Preferred embodiments of the present invention are laid down in the subclaims.

Preferably, by arranging the fuel pump at the first horizontal face disposed on the rear lower side of the first inclined face provided at the front portion of the fuel tank, fuel is easy to store to a portion arranged with the fuel pump. Further, the front side of the first horizontal face is formed with the second inclined face having the inclination angle larger than that of the first inclined face and therefore, when the motor cycle is decelerated, fuel can be prevented from flowing to the front side of the fuel tank. Further, the pair of left and right projected streak portions straddling the tank rails are formed between the outer bottom portions disposed on the outer sides of the pair of left and right tank rails and the first horizontal face and therefore, when the motor cycle is banked in a left and right direction in running, fuel stored on the first horizontal face can be prevented from flowing in a lateral direction.

By such an operation, even when a remaining amount of fuel in the fuel tank is reduced, the remaining fuel can be made to stay at a vicinity where the fuel tank is arranged and therefore, the remaining fuel can efficiently be supplied to the side of the engine.

Further, the first inclined face, the second inclined face, the first horizontal face, and the outer bottom portions constituting the bottom portion of the fuel tank can be formed by integrally forming the bottom portion of the fuel tank and therefore, the fuel tank can be fabricated by a simple constitution without needing extra parts and without increasing a number of operating steps.

Further, the second horizontal faces having the height substantially the same as that of the first horizontal face are provided at the outer bottom portions disposed on the outer sides of the tank rails, and the third horizontal face connected with the first horizontal face and the second horizontal face is formed at the rearmost portion of the fuel tank and therefore, when the motor cycle is accelerated, the fuel flowing from the outer bottom portions to rear sides are merged at the third horizontal face disposed at the rearmost portion of the fuel tank and can be collected to the vicinity of the first horizontal face arranged with the fuel pump. Thereby, even when the remaining amount of the fuel in the fuel tank is reduced, the remaining fuel can efficiently be supplied to the side of the engine.

In addition thereto, the bottom portion of the fuel tank disposed between the pair of left and right projected streak portions forms a recess portion by utilizing a space between the pair of left and right tank rails and therefore, a volume of the fuel tank can be enlarged without increasing a total height or a total width of the fuel tank.

Further, by constituting a lowest portion of the fuel tank by the first horizontal face, fuel is easily collected to the vicinity of the fuel pump and the remaining fuel can further efficiently be supplied to the side of the engine.

In the following, the present invention is explained in greater detail by means of embodiments thereof in conjunction with the accompanying drawings, wherein:
Fig.1 is a view showing a constitution of a fuel tank 1,
Fig.2(a) is a sectional view taken along a line IIa-IIa of the fuel tank 1 of Fig.1, and Fig.2(b) is a sectional view tank along a line IIb-IIb thereof;
Fig.3(a) is a plane view of the fuel tank 1, and Fig.3(b) is a sectional view taken along a line IIIb-IIIb of the fuel tank 1;
Fig.4 is a partial side view of a vehicle 61 according to an embodiment;
Fig.5 is a side view of the fuel tank 1 according to an embodiment,
Fig.6 is a plane view of the fuel tank 1 according to the embodiment;
Fig.7 is a sectional view taken along a line VII-VII of the fuel tank 1 of Fig.5;

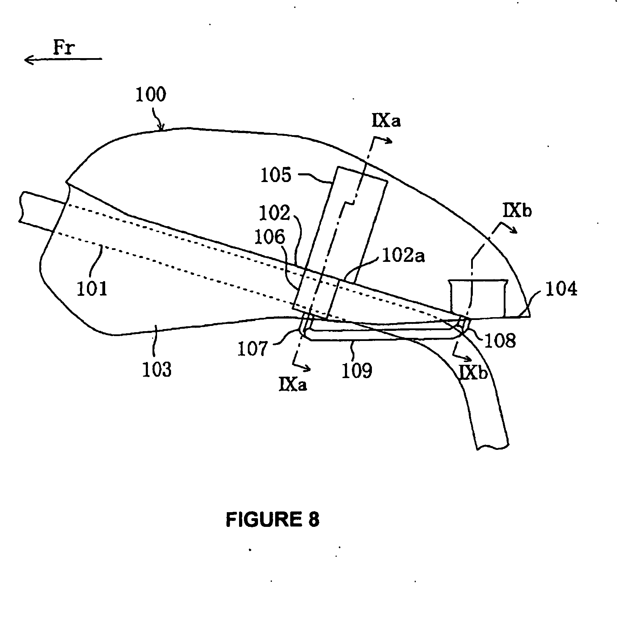

Fig.8 is a view showing a constitution of a fuel tank 100 of a background art; and

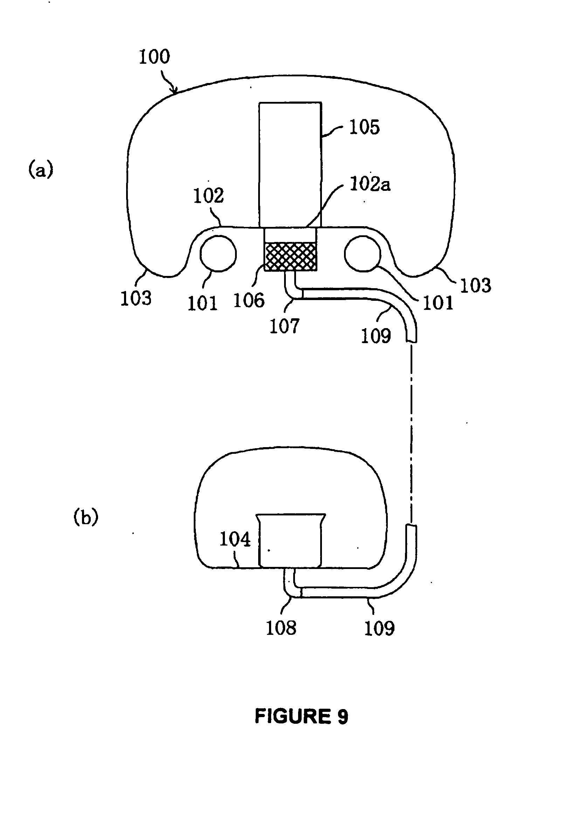

Fig.9(a)is a sectional view taken along a line IXa-IXa of the fuel tank 100 of Fig.8, and Fig.9(b) is a sectional view taken along a line IXb-IXb thereof.

### Description of Reference Numerals and Signs

- 1: fuel tank
- 2: tank rail
- 3: inner bottom portion
- 4: outer bottom portion
- 5: first inclined face
- 6: first horizontal face
- 7: second inclined face
- 8: fuel pump
- 9: projected streak portion
- 10: cross member
- 11: second horizontal face
- 12: third horizontal face
- 15: fuel
- 26: oil tank
- 33: head pipe
- 36: down tube
- 37: gusset
- 38: rear arm bracket
- 51: sucking portion
- 52: filter
- 61: vehicle
- 62: vehicle body
- 63: vehicle body frame
- 67: seat
- 70: driving apparatus
- 71: engine
- 100: fuel tank
- 101: tank rail

- 102: inner bottom face
- 103: overhang portion
- 104: horizontal face
- 105: fuel pump
- 106: projected portion
- 107: suck in portion
- 108: suck out portion
- 109: tube

It has been investigated on how a fuel can efficiently be supplied to a side of an engine by a simple constitution without increasing cost under a restriction in view of layout.

Generally, the fuel tank of a motor cycle is mounted on a tank rail inclined to a rear lower side and therefore, also a bottom portion of the fuel tank is inclined along an inclination of the tank rail, and a fuel at inside of the fuel tank necessarily gathers to a rear portion of the fuel tank. However, a rear portion of the fuel tank is provided with a seat of a rider and therefore, a height of the fuel tank is restrained to be low and therefore, it is difficult to install a fuel pump at the rear portion of the fuel tank at which a fuel gathers.

However, actually, when a motor cycle is running, acceleration and deceleration are repeatedly carried out, further, the motor cycle moves up and down a hill and turns at a corner and therefore, at each occasion, the fuel at inside of the fuel tank always flows in a front and rear direction and in a left and right direction. That is, the fuel at inside of the fuel tank does not always stay at the rear portion of the fuel tank.

Therefore, when the fuel at inside of the fuel tank can be prevented from flowing in the front and rear direction and in the left and right direction in running and the fuel can be made to stay as near to the fuel pump as possible, in the actual running, the fuel can efficiently be supplied to the side of the engine.

Hence, it has been conceived that means effective for preventing the fuel at inside of the fuel tank from flowing in the front and rear direction and in the left and right direction can be constituted by providing a change in a shape at a bottom portion of the fuel tank. Such a change in the shape of the bottom portion of the fuel tank may be carried out at a portion at which the portion is not restricted in view of layout, further, the bottom portion of the fuel tank can be worked by integrally forming the bottom portion and therefore, design and fabrication thereof can easily be carried out and the bottom portion can be realized without increasing cost.

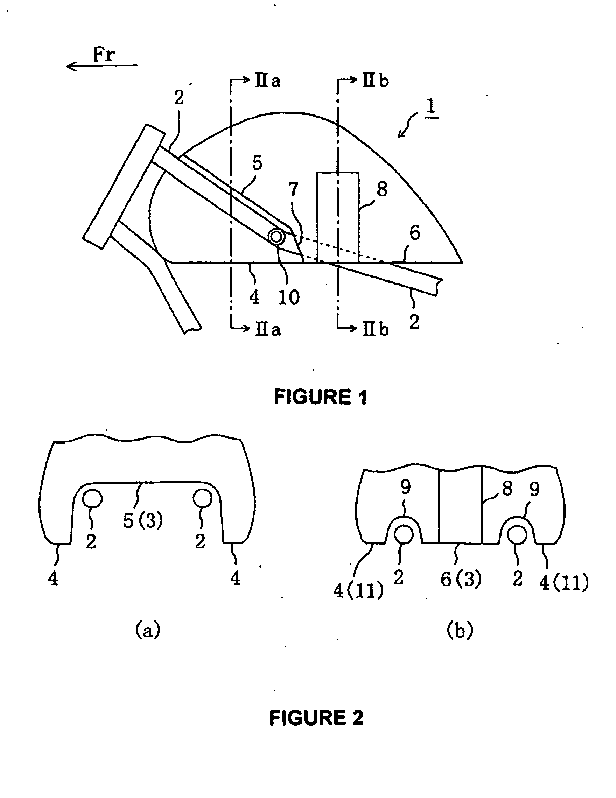

An explanation will be given of a fuel tank according to an embodiment in reference to Fig.1 through Fig.3 as follows. Incidentally, in the drawings, an arrow mark Fr designates a front side of a motor cycle.

Fig.1 is a view schematically showing a constitution of a fuel tank 1 according to an embodiment. The fuel tank 1 is arranged on a pair of left and right tank rails 2 constituting a vehicle body frame of a motor cycle, and the pair of left and right tank rails 2 are inclined to a rear lower side. Further, a bottom portion of the fuel tank 1 includes an inner bottom portion 3 disposed between the pair of left and right tank rails 2 and outer bottom portions disposed on outer sides of the pair of left and right tank rails 2. Further, the inner bottom portion 3 includes a first inclined face 5 at a front portion of the fuel tank 1 and includes a first horizontal face 6 at a rear portion of the fuel tank 1.

The first inclined face 5 and the first horizontal face 6 are continuously formed in a front and rear direction by interposing a second inclined face 7 having an inclination angle larger than that of the first inclined face 5. Further, a pair of left and right projected streak portions 9 straddling the tank rails 2 are formed at regions between the first horizontal face 6 of the inner bottom portion and the outer bottom portions 4. Further, a fuel pump 8 is arranged at the first horizontal face 6 of the inner bottom portion.

Figs.2(a), (b) are a sectional view taken along a line IIa-IIa at the front portion of the fuel tank 1 shown in Fig.1 and a sectional view taken along a line IIb-IIb at the rear portion of the fuel tank 1.

As shown by Fig.2(a), at the front portion of the fuel tank 1, the inner bottom portion 3 disposed on inner sides of the pair of left and right tank rails 2 constitutes the first inclined face 5 and the outer bottom portions 4 disposed on outer sides of the tank rail 2 constitute overhangs disposed on a lower side of the first inclined face 5.

Further, as shown by Fig.2(b), at the rear portion of the fuel tank 1, the inner bottom portion 3 disposed on inner sides of the tank rail 2 constitutes the first horizontal face 6, and the first horizontal face 6 is connected to the outer bottom portions 4 disposed on outer sides of the tank rails 2 by the pair of projected streak portions 9 formed to straddle the tank rails 2. Further, the fuel pump 8 is arranged at the first horizontal face 6.

Here, the first inclined face 5, the second inclined face 7, the first horizontal face 6, the outer bottom portions 4 and the pair of projected streak portion 9 respectively constitute a continuous face and therefore, can be formed by integrally forming by the same member.

Incidentally, there is a case in which the pair of left and right tank rails 2 are connected by a cross member 10 at middle portions of the tank rails in order to reinforce a strength thereof, in that case, it is difficult to form the second inclined face 7 on a front side of the cross member 10. Because in the case in which the fuel tank 1 is installed from above the tank rails 2, when the second inclined face 7 is formed on the front side of the cross member 10, the bottom portion of the fuel tank 1 is brought into contact with the cross member 10 and the fuel tank 1 cannot be arranged at a predetermined position. Therefore, in order to widely ensure a region of the first horizontal face 6, it is preferable to form the second inclined face 7 as near to the rear side of the cross member 10 as possible.

Further, as shown by Fig.2(b), in the rear portion of the fuel tank 1, the outer bottom portions 4 disposed on the outer sides of the tank rails 2 may include second horizontal faces 11 disposed at a height substantially the same as that of the first horizontal face 6, further, the second horizontal faces 11 may be extended to the outer bottom portions 4 at the front portion of the fuel tank 1.

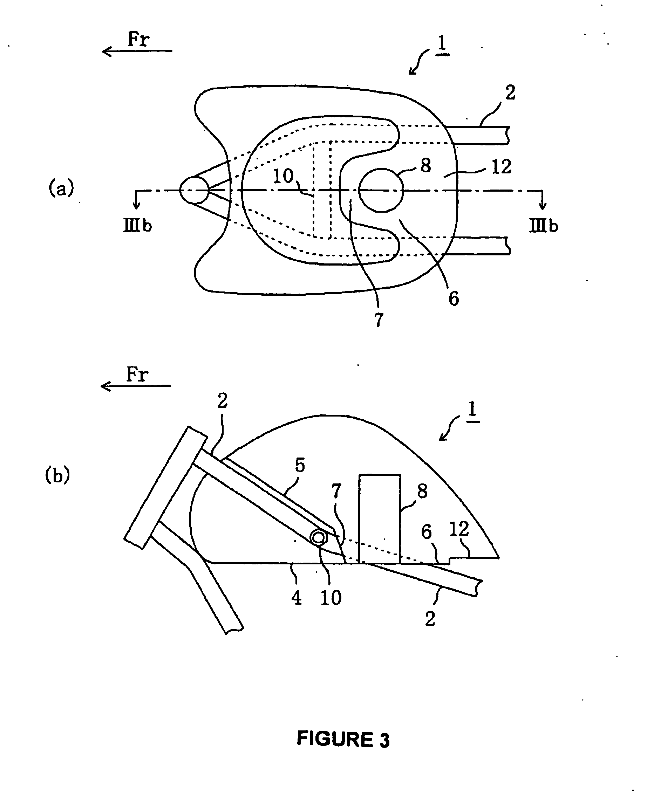

Figs.3(a), (b) are a plane view of the fuel tank 1 and a sectional view of the fuel tank taken along a line IIIb-IIIb.

As shown by Fig.3(a), at the rearmost portion of the bottom portion of the fuel tank 1, the first horizontal face 6 of the inner bottom portion 3 and the second horizontal faces 11 of the outer bottom portion 4 are connected to each other to constitute a third horizontal face 12 at the connecting portion. Naturally, the third horizontal face 12 can be formed by forming integrally with other faces constituting the bottom portion of the fuel tank 1.

Further, as shown by Fig.3(b), the third horizontal face 12 may be formed to be positioned slightly upward from the first horizontal face 6. In this case, the first horizontal face 6 constitutes the lowest portion of the fuel tank 1. That is, the fuel pump 8 is arranged at the lowest portion of the fuel tank 1.

According to the fuel tank 1 of the embodiment, by arranging the fuel pump 8 at the first horizontal face 6 disposed at a position lower than the first inclined face 5 provided at the front portion of the fuel tank 1 and provided at the rear portion of the fuel tank 1, fuel tends to be easily stored in the portion arranged with the fuel pump 8.

Further, the second inclined face 7 having the inclination angle larger than that of the first inclined face 5 is formed on the front side of the first horizontal face 6 and therefore, when the motor cycle is decelerated, fuel can be prevented from flowing to the front side of the fuel tank 1.

Further, the pair of left and right projected streak portions 9 straddling the tank rails 2 are formed between the outer bottom portions 4 disposed on the outer sides of the pair of left and right tank rails 2 and the first horizontal face 6 and therefore, fuel stored on the first horizontal face 6 can be prevented from flowing in a lateral direction.

By such operation, even when a remaining amount of fuel at inside of the fuel tank 1 is reduced, remaining fuel can be made to stay at a vicinity where the fuel pump 8 is arranged and therefore, the remaining fuel can efficiently be supplied to the side of the engine.

Incidentally, the first inclined face 5, the second inclined face 7, the first horizontal face 6 and the outer bottom portions 4 constituting the bottom portion of the fuel tank 1 according to the embodiment are integrally formed and therefore, the fuel tank can be fabricated by a simple constitution without needing extra parts and without increasing a number of operating steps.

Further, the bottom portion of the fuel tank 1 disposed between the pair of left and right projected streak portions 9 forms a recess portion utilizing a space between the pair of left and right tank rails and therefore, a volume thereof can be enlarged without increasing a total height or a total width of the fuel tank 1.

In addition thereto, the second horizontal faces 11 having the height substantially the same as that of the first horizontal face 6 are provided at the outer bottom portions 4 disposed on the outer sides of the tank rails 2, at the rearmost portion of the fuel tank 1, the third horizontal face 12 connected with the first horizontal face 6 and the second horizontal faces 11 is formed and therefore, when the motor cycle is accelerated, fuel flowing rearward from the outer bottom portions 4 can be collected to the vicinity of the first horizontal face 6 arranged with the fuel pump 8 by flowing to the third horizontal face 12 disposed at the rearmost portion of the fuel tank 1. Thereby, even when the remaining amount of fuel at inside of the fuel tank 1 is reduced, the remaining fuel can efficiently be supplied to the side of the engine.

Further, by placing the first horizontal face 6 at the lowest portion of the fuel tank 1, fuel is easily collected to the vicinity of the fuel pump 8 and the remaining fuel can further efficiently be supplied to the side of the engine.

Further, in the embodiment, the first horizontal face 6, the second horizontal face 11 and the third horizontal face 12 are not necessarily needed to be horizontal relative to the ground face but may be a plane disposed in the same face capable of being discriminated from the first inclined face 5 and the second inclined face 7.

Further, although the pair of left and right projected streak portions 9 are formed to straddle over the tank rail 2, the projected streak portion 9 may be formed, for example, on upper sides of the tank rails 2 in order to ensure clearances between the projected streak portions 9 and the tank rails 2. Also in this case, the bottom portion of the fuel tank disposed between the pair of left and right projected streak portions 9 constitutes the recess portion.

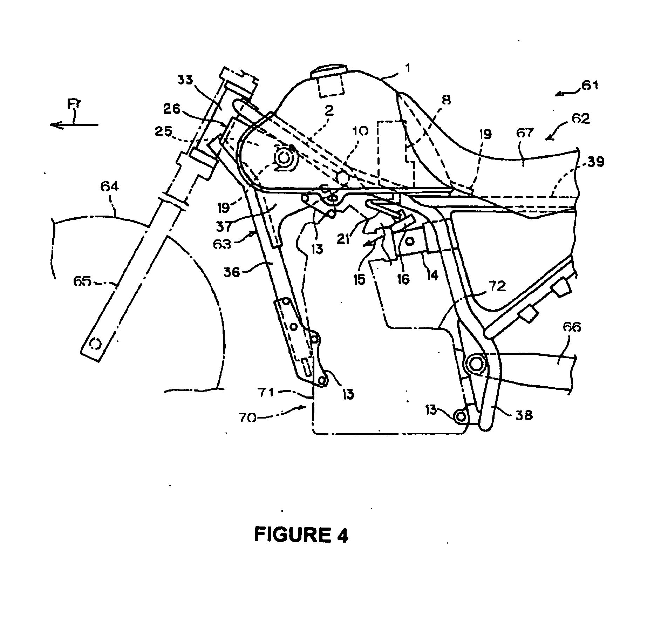

A detailed description will be given of the constitution of the fuel tank according to the embodiment in reference to Fig. 4 through Fig. 7 as follows. Insidentally, in the drawings, the arrow mark Fr designates the front side in a direction of advancing a vehicle 61.

As shown by Fig.4, a vehicle body 62 of the vehicle 61 is provided with a vehicle body frame 63, a front fork 65 supported by a front portion of the vehicle body frame 63 for supporting a front wheel 64, a rear arm 66 pivotally supported by a rear portion of the vehicle body frame 63 for supporting a rear wheel, and a seat 67 which is supported by a rear portion of the vehicle body frame 63 and on which a rider can be seated in a straddleriding style.

Further, the vehicle 61 is provided with a driving apparatus 70 for enabling to drive to run the rear wheel. The driving apparatus 70 is provided with an engine 71 constituting an internal combustion engine, and a power transmitting apparatus 72 cooperatively provided to the engine 71, and the engine 71 and the power transmitting apparatus 72 are supported by the vehicle body frame 63 integrally by a support piece 13. Further, the vehicle 61 is provided with a throttle valve 14 cooperatively provided to a suction side of the engine 71, a fuel injection valve 16 for injecting a fuel 15 to an inner portion of the engine 71 to be able to supply thereto, and a chain wrapping type cooperatively moving means (not illustrated) for connecting the rear wheel to the power transmitting apparatus 72 to move cooperatively.

The vehicle 61 is supported on the vehicle body frame 63 by a support piece 19 having a damping function. The fuel tank 1 stores the fuel 15 to be supplied to the engine 71 via the fuel injection valve 16. Further, the fuel pump 8 of an electric type is contained in the fuel tank 1, supported by the fuel tank 1 by a fastening piece 23 and while the fuel pump 8 sucks the fuel 15 in the fuel tank 1, the fuel pump 8 pressurizes the fuel 15 to be able to be supplied to the fuel injection valve 16 via a fuel tube 21. An oil tank 26 stores a lubricating oil 25 to be supplied to the engine 71 as a dry sump system.

When the engine 71 of the driving apparatus 70 is driven, the fuel 15 in the fuel tank 1 is supplied to an inner portion of the engine 71 via the fuel injection valve 16 by the fuel pump 8 to subject combustion. Further, by the oil pump cooperatively moved with the engine 71, the oil 25 in the oil tank 26 is supplied to respective lubricated portions of the driving apparatus 70 to lubricate to continue to drive the engine 71. Further, the vehicle 61 is made to be able to run by moving the rear wheel cooperatively with driving the engine 71 via the power transmitting apparatus 72.

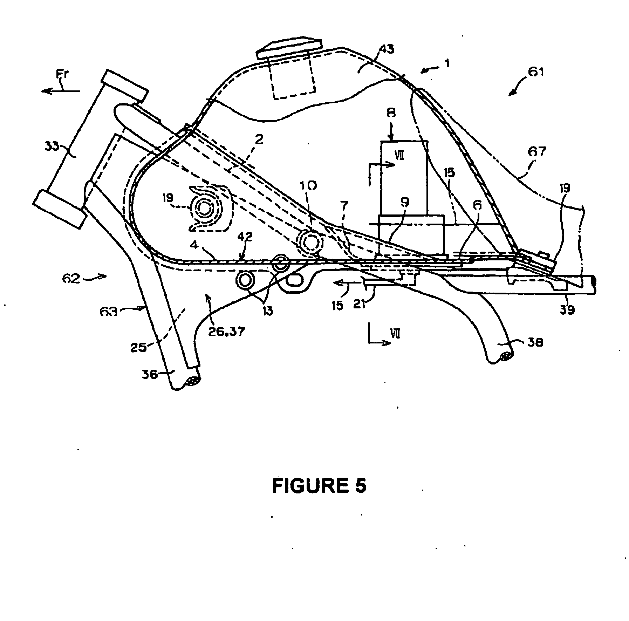

A further detailed explanation will be given of the vehicle body frame 63 in reference to Fig.5. A head pipe 33 supports the front fork 65 at a front end portion of the vehicle body frame 63. A pair of left and right tank rails 2 are extended from an upper portion of the head pipe 33 to a rear lower side to support a rear portion of the driving apparatus 70 and support the fuel tank 1. Further, the cross member 10 couples middle portions of the tank rails 2.

Further, a down tube 36 is arranged on lower sides of the left and right tank rails 2 and extended from a lower portion of the head pipe 33 to a rear lower side to support a front portion of the driving apparatus 70. The head pipe 33 and a front end portion of the down tube 36 are solidly coupled to each other by a gusset 37 for reinforcement. Further, a pair of left and right rear arm brackets 38 are integrally extended from front end portions of extending the respective tank rails 2 to lower sides to axially support the rear arm 66. Seat rails 39 are extended from end portions of extending the respective tank rails 2 to rear upper sides to support the seat 67.

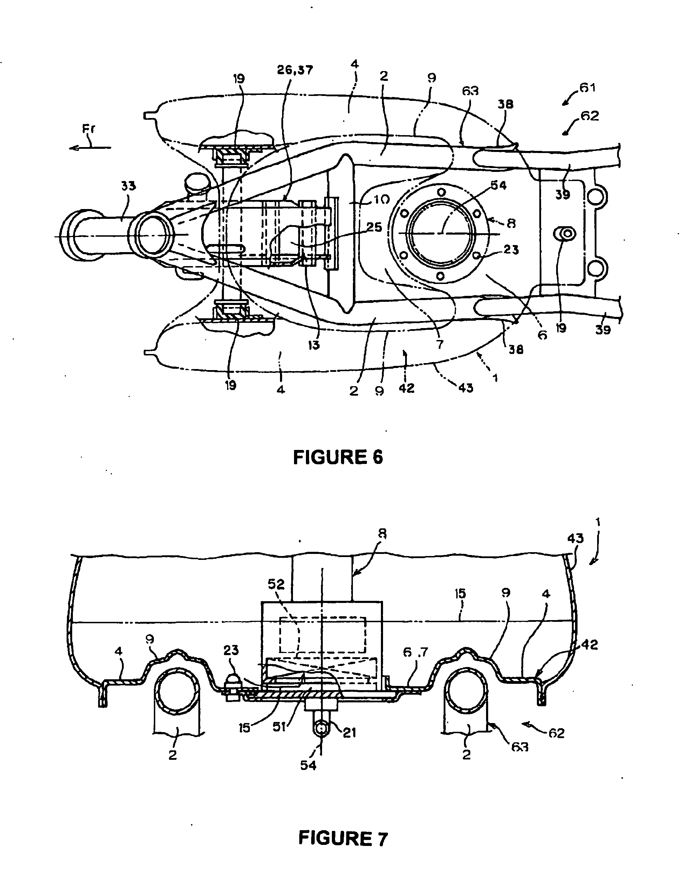

As shown by Fig. 6 and Fig. 7, the fuel tank 1 is provided with a bottom plate 42 constituting a lower end portion thereof, and a tank main body 43 constituting a shape of an upside down bowl for covering the bottom plate 42 from an upper side thereof, and a closed space capable of storing the fuel 15 is formed by the bottom plate 42 and the tank main body 43.

The bottom plate 42 of the fuel tank 1 is formed with the pair of left and right projected streak portions 9 bulged to upper sides, extended in a front and rear direction and externally fitted to the respective tank rails 2 from upper sides thereof. A front end portion of the middle portion 7 of the bottom plate 42 disposed between the left and right projected streak portions 9 is inclined to extend to a front upper side. Further, at least front portions of the respective projected streak portions 9 are inclined to extend to front upper sides along the respective tank rails 2.

Rear ends of the respective projected streak portions 9 are separated from a rear end of an upper face of the bottom plate 42 to a front side, and a rear end portion of the upper face of the bottom plate 42 is made to constitute substantially a lowest portion 47 at the upper face of the bottom plate 42. Further, the respective outer portions 4 of the upper face of the bottom plate 42 respectively disposed on outer sides of the respective projected streak portions 9 and substantially the lowest portion 47 of the bottom plate 42 are disposed substantially on horizontal faces continuous to each other.

The fuel pump 8 is arranged between the left and right projected streak portions 9, and a lower end portion of the fuel pump 8 is supported by a fastening piece 23 at a portion of the bottom plate 42 at a vicinity of substantially the lowest portion 47 of the upper face of the bottom plate 42. Further, the fuel pump 8 is provided with a sucking portion 51 formed at a lower end portion for sucking the fuel 15 and a filter 52 for filtering the fuel sucked to the sucking portion 51.

Further, the sucking portion 51 of the fuel pump 8 is arranged between the left and right projected streak portions 9, at a vicinity of substantially the lowest portion 47 in a horizontal direction, and at a vicinity of an upper side of an imaginary extended face of substantially the lowest portion 47 in an up an down direction. The sucking portion 51 is arranged substantially at a center portion 54 in a width direction of the vehicle 61. Further, a delivery portion of the fuel pump 8 is communicated with a fuel injection valve 16 via the fuel tube 21.

According to the above-described constitution, the bottom plate 42 of the fuel tank 1 is formed with the pair of left and right projected streak portions 9 bulged to upper sides, extended in the front and rear direction and respectively externally fitted to the respective tank rails 2 from the upper sides, and the sucking portion 51 of the fuel 15 of the fuel pump 8 is arranged between the left and right projected streak portions 9 and at a vicinity of substantially the lowest portion 47 of the upper face of the bottom plate 42.

Here, an interval of the left and right projected streak portions 9 constitutes a recess portion and therefore, constitutes a portion at which the fuel 15 is easily stored. Further, the sucking portion 51 of the fuel pump 8 is arranged at a vicinity of substantially the lowest portion 47 of the upper face of the bottom plate 42 and therefore, even when a remaining amount of the fuel 15 in the fuel tank 1 is reduced, the fuel 15 is sufficiently supplied to the side of the engine 71 by the fuel pump 8.

Further, an interval between the left and right projected streak portions 9 is made to constitute the recess portion by utilizing a space between the left and right tank rails 2 and therefore, a volume of the fuel tank 1 is more increased than that of the background art.

Further, the sucking portion 51 of the fuel pump 8 is arranged between the left and right projected streak portions 9 formed in correspondence with the left and right tank rails 2 and is disposed substantially at the center portion 54 in the width direction of the vehicle 61 and therefore, even when the vehicle 61 is banked in a left and right direction in running, the fuel 15 is liable to remain at a surrounding of the sucking portion 51 of the fuel pump 8. Therefore, in such a running state of the vehicle 61, an amount of the fuel 15 supplied to the side of the engine 71 by the fuel pump 8 is restrained from being reduced.

The fuel pump 8 is supported by a portion of the bottom plate 42 at a vicinity of substantially the lowest portion 47 of the upper face of the bottom plate 42. Therefore, in the fuel tank 1, the height of an upper end of the fuel pump 8 can be restrained to be low and therefore, even when the height of the fuel tank 1 is low, the fuel pump 8 is easily installed in the fuel tank 1.

Further, a front portion of the middle portion (inclined face) 7 of the bottom plate 42 disposed between the left and right projected streak portions 9 is inclined to extend to the front upper side and therefore, although when the vehicle 61 is decelerated in running, the fuel 15 in the fuel tank 1 is going to flow to the front side in the fuel tank 1 by an inertia force thereof, the flow is prevented by the middle portion 7 inclined to extend to the front upper side, and the fuel 15 is liable to remain at the surrounding of the sucking portion 51 of the fuel pump 8. Therefore, in such a running state of the vehicle 61, an amount of the fuel 15 supplied to the side of the engine 71 by the fuel pump 8 is restrained from being reduced.

Further, at least front portions of the respective projected streak portions 9 are inclined to extend respectively to front upper sides and therefore, although when the vehicle 61 is decelerated in running, the fuel 15 in the fuel tank 1 is going to flow to the front side in the fuel tank 1 by the inertia force, the flow is prevented by the respective projected streak portions 9 inclined to extend to the front upper sides, and the fuel 15 is liable to remain at the surrounding of the sucking portion 51 of the fuel pump 8. Therefore, even in such a state of running the vehicle 61, the amount of the fuel 15 supplied to the side of the engine 71 by the fuel pump 8 is restrained from being reduced.

The rear ends of the respective projected members 9 are separated to the front sides from the rear end of the upper face of the bottom plate 42. Therefore, although when the vehicle 61 is accelerated in running, the fuel 15 in the fuel tank 1 is going to flow to the rear side in the fuel tank 1 by the inertia force, the fuel 15 flowing to the rear side in the outer side regions of the respective projected streak portions 9 smoothly and the fuel 15 flowing to the rear side between the left and right projected streak portions 9 are merged and the fuel 15 is liable to gather to the surrounding of the sucking portion 51 of the fuel pump 8. Therefore, even in such a state of running the vehicle 61, the amount of the fuel 15 supplied to the side of the engine 71 by the fuel pump 8 is restrained from being reduced.

Further, the outer side portions 4 of the upper face of the bottom plate 42 disposed on the outer sides of the respective projected members 9 and substantially the lowest portion 47 of the upper face of the bottom plate 42 are disposed substantially on the horizontal faces continuous to each other and therefore, even in the case of any of the states of running the vehicle 61, the fuel 15 in the fuel tank 1 totally flows to side of substantially the lowest portion 47 on the bottom plate 42 and is liable to gather to the surrounding of the sucking portion 51 of the fuel pump 8. Therefore, even when the remaining amount of the fuel 15 in the fuel tank 1 is reduced, the fuel 15 can sufficiently be supplied to the side of the engine 71 by the fuel pump 8.

Although the technical teaching has been by the preferable embodiment described above, such a description is not an item of limitation but naturally can be modified variously. Further, in the above-described embodiment, although the vehicle 61 may be an automatic three wheel vehicle or an automatic four wheel vehicle, the embodiment is more preferable to be applied to the motor cycle having a severe restriction in view of layout of the fuel tank.

Accordingly, a fuel tank capable of supplying the remaining fuel efficiently to the side of the engine can be provided by a simple constitution.

## Claims

1. A motor cycle comprising a fuel tank (1), said motor cycle (61) having a pair of left and right tank rails (2) constituting a vehicle body frame (63) of.the motor cycle (61) and being inclined to rear lower sides, the fuel tank (1) is arranged on the pair of left and right tank rails (2) of the motor cycle (61);
a bottom portion (3,4) of the fuel tank (1) including an inner bottom portion (3) which is disposed at a region between the pair of left and right tank rails (2) of the motor cycle (61), and outer bottom portions (4) which are disposed at regions on outer sides of the pair of left and right tank rails (2) of the motor cycle (61);
the inner bottom portion (3) including a first inclined face (5) formed at a front portion of the fuel tank (1) and including a first horizontal face (6) at a rear portion of the fuel tank (1);
a pair of left and right projected streak portions (9) are formed at regions between the first horizontal face (6) of the inner bottom portion (3) and the outer bottom portions (4); and
a fuel pump (8) being arranged at the first horizontal face (6) of the inner bottom portion (3),
**characterized in that** the pair of left and right projected streak portions (9) straddle the tawk rails (2) of the motor cycle (61)
the first inclined face (5) of the inner bottom portion (3) extends along an inclination of the tank rails (2) of the motor cycle (61) ,
the first inclined face (5) and the first horizontal face (6) are formed continuously in a front and rear direction while interposing a second inclined face (7) therebetween, and an inclination angle of the second inclined face (7) is larger than that of the first inclined face (5).

2. The motor cycle according to claim 1, **characterized in that** the bottom portion (3,4) of the fuel tank (1) is integrally formed.

3. The motor cycle according to claim 1 or 2, **characterized In that** each outer bottom portion (4) includes a second horizontal face (11) disposed at a height substantially the same as a height of the first horizontal face (6) of the inner bottom portion (3).

4. The motor cycle according to claim 3, **characterized in that** a third horizontal face (12) is formed by connecting the first horizontal face (6) of the inner bottom portion (3) and the second horizontal faces (11) of the outer bottom portions (4) to each other at a rearmost portion of the fuel tank (1), and the third horizontal face (12) is disposed on an upper side of a rear portion of the tank rails (2) of the motor cycle (61).

5. The motor cycle according to one of claims 1 to 4, **characterized in that** the first horizontal face (6) constitutes a lowest portion of the fuel tank (1).

6. The motor cycle according to one of claims 1 to 5, **characterized in that** the pair of left and right tank rails (2) are connected by a cross member (10) at middle portions thereof, and the second inclined face (7) of the fuel tank (1) is formed at a vicinity of a rear side of the cross member (10).

7. The motor cycle according to one of claims 1 to 6, **characterized in that** the second inclined face (7) of the fuel tank (1) is provided with a function of preventing a fuel in the fuel tank (1) from flowing to a front side of the fuel tank (1) when the motor cycle (61) is decelerated.

## Patentansprüche

1. Motorrad, das einen Kraftstofftank (1) aufweist, wobei das Motorrad (61) ein Paar von linken und rechten Tankschienen (2) hat, die einen Fahrzeugkarosserierahmen (63) des Motorrades (61) bilden und die zu hinteren, unteren Seiten geneigt sind, wobei der Kraftstofftank (1) auf dem Paar der linken und rechten Tankschienen (2) des Motorrades (61) angeordnet ist;
einen Bodenabschnitt (3, 4) des Kraftstofftanks (1), der einen inneren Bodenabschnitt (3) enthält, der in einem Bereich zwischen dem Paar der linken und rechten Tankschienen (2) des Motorrades (61) angeordnet ist, und äußere Bodenabschnitte (4), die in Bereichen an Außenseiten des Paares der linken und rechten Tankschienen (2) des Motorrades (61) angeordnet sind;
wobei der innere Bodenabschnitt (3) eine erste geneigte Fläche (5) enthält, gebildet an einem vorderen Abschnitt des Kraftstofftanks (1), und eine erste horizontale Fläche (6) an einem hinteren Abschnitt des Kraftstofftanks (1) enthaltend;
ein Paar von linken und rechten vorgesprungenen Streifenabschnitten (9) an Bereichen zwischen der ersten horizontalen Fläche (6) des inneren Bodenabschnittes (3) und den äußeren Bodenabschnitten (4) gebildet ist; und
eine Kraftstoffpumpe (8) an der ersten horizontalen Fläche (6) des inneren Bodenabschnittes (3) angeordnet ist,
**dadurch gekennzeichnet, dass** das Paar der linken und rechten vorgesprungenen Streifenabschnitte (9) die Tankschienen (2) des Motorrades (61) überspannt, sich die erste geneigte Fläche (5) des inneren Bodenabschnittes (3) entlang einer Neigung der Tankschienen (2) des Motorrades (61) erstreckt,
wobei die erste geneigte Fläche (5) und die erste horizontale Fläche (6) fortlaufend in einer Richtung nach vorn und nach hinten gebildet sind, während eine zweite geneigte Fläche (7) dazwischen eingesetzt ist, und ein Neigungswinkel der zweiten geneigten Fläche (7) größer als derjenige der ersten geneigten Fläche (5) ist.

2. Motorrad nach Anspruch 1, **dadurch gekennzeichnet, dass** der Bodenabschnitt (3, 4) des Kraftstofftanks (1) einstückig gebildet ist.

3. Motorrad nach Anspruch 1 oder 2, **dadurch gekennzeichnet, dass** jeder äußere Bodenabschnitt (4) eine zweite horizontale Fläche (11) enthält, angeordnet in einer Höhe, im Wesentlichen dieselbe wie eine Höhe der ersten horizontalen Fläche (6) des inneren Bodenabschnittes (3).

4. Motorrad nach Anspruch 3, **dadurch gekennzeichnet, dass** eine dritte horizontale Fläche (12) durch miteinander Verbinden der ersten horizontalen Fläche (6) des inneren Bodenabschnittes (3) und der zweiten horizontalen Flächen (11) der äußeren Bodenabschnitte (4) an einem hintersten Abschnitt des Kraftstofftanks (1) gebildet ist und die dritte horizontale Fläche (12) auf einer oberen Seite eines hinteren Abschnittes der Tankschienen (2) des Motorrades (61) angeordnet ist.

5. Motorrad nach einem der Ansprüche 1 bis 4, **dadurch gekennzeichnet, dass** die erste horizontale Fläche (6) einen tiefsten Abschnitt des Kraftstofftanks (1) bildet.

6. Motorrad nach einem der Ansprüche 1 bis 5, **dadurch gekennzeichnet, dass** das Paar von linken und rechten Tankschienen (2) durch ein Kreuzteil (10) an Mittelabschnitten derselben verbunden ist und die zweite geneigte Fläche (7) des Kraftstofftanks (1) in einer Nähe einer hinteren Seite des Kreuzteiles (10) gebildet ist.

7. Motorrad nach einem der Ansprüche 1 bis 6, **dadurch gekennzeichnet, dass** die zweite geneigte Fläche (7) des Kraftstofftanks (1) mit einer Funktion versehen ist, um den Kraftstoff in dem Kraftstofftank (1) am Fließen zu einer vorderen Seite des Kraftstofftanks (1) zu hindern, wenn das Motorrad (61) verlangsamt wird.

## Revendications

1. Motocycle comprenant un réservoir de carburant (1), ledit motocycle (61) possédant une paire de rails de réservoir gauche et droit (2) constituant un cadre de véhicule (63) du motocycle (61) et étant incliné vers les côtés inférieurs arrière, le réservoir de carburant (1) étant agencé sur la paire de rails de réservoir gauche et droit (2) du motocycle (61) ;
une portion basse (3, 4) du réservoir de carburant (1) comprenant une portion basse interne (3) qui est disposée dans une région entre la paire de rails de réservoir gauche et droit (2) du motocycle (61), et des portions basses externes (4) qui sont disposées dans des régions sur les côtés externes de la paire de rails de réservoir gauche et droit (2) du motocycle (61) ;
la portion basse interne (3) comprenant une première face inclinée (5) formée sur une portion avant du réservoir de carburant (1) et comprenant une première face horizontale (6) sur une portion arrière du réservoir de carburant (1) ;
une paire de portions en saillie striées gauche et droite (9) sont formées sur des régions entre la première face horizontale (6) de la portion basse interne (3) et des portions basses externes (4) ; et
une pompe à carburant (8) étant agencée sur la première face horizontale (6) de la portion basse interne (3),
**caractérisé en ce que** la paire de portions en saillie striées gauche et droite (9) sont à cheval sur les rails de réservoir (2) du motocycle (61)
la première face inclinée (5) de la portion basse interne (3) se prolonge le long d'une inclinaison des rails de réservoir (2) du motocycle (61),
la première face inclinée (5) et la première face horizontale (6) sont formées de manière continue dans une direction avant et arrière tout en interposant une seconde face inclinée (7) entre elles, et un angle d'inclinaison de la seconde face inclinée (7) est plus grand que celui de la première face inclinée (5).

2. Motocycle selon la revendication 1, **caractérisé en ce que** la portion basse (3, 4) du réservoir d'essence (1) est formée d'une pièce.

3. Motocycle selon la revendication 1 ou 2, **caractérisé en ce que** chaque portion basse externe (4) comprend une deuxième face horizontale (11) disposée à une hauteur sensiblement identique à une hauteur de la première face horizontale (6) de la portion basse interne (3).

4. Motocycle selon la revendication 3, **caractérisé en ce qu'**une troisième face horizontale (12) est formée en raccordant la première face horizontale (6) de la portion basse interne (3) et les deuxièmes faces horizontales (11) des portions basses externes (4) les unes aux autres à une portion la plus arrière du réservoir de carburant (1), et la troisième face horizontale (12) est disposée sur un côté supérieur d'une portion arrière des rails de réservoir (2) du motocycle (61).

5. Motocycle selon l'une des revendications 1 à 4, **caractérisé en ce que** la première face horizontale (6) constitue une portion la plus basse du réservoir de carburant (1).

6. Motocycle selon l'une des revendications 1 à 5, **caractérisé en ce que** la paire de rails de carburant gauche et droit (2) sont raccordés par une traverse (10) à des portions milieu de ces derniers, et la seconde face inclinée (7) du réservoir de carburant (1) est formée à proximité d'un côté arrière de la traverse (10).

7. Motocycle selon l'une des revendications 1 à 6, **caractérisé en ce que** la seconde face inclinée (7) du réservoir de carburant (1) est équipée d'une fonction permettant d'empêcher un carburant du réservoir de carburant (1) de couler vers un côté avant du réservoir de carburant (1) quand le motocycle (61) décélère.
